# EUROPEAN PATENT SPECIFICATION

(11) **EP 4 352 945 B1**
(45) Date of publication and mention of the grant of the patent: **09.12.2026**
(21) Application number: 22728815.6
(22) Date of filing: 11.05.2022
(51) Int. Cl.: H04M 3/487, H04L 65/1104, H04M 1/72409

(54) **METHOD AND SYSTEM FOR PROVIDING PUBLIC ANNOUNCEMENTS**
VERFAHREN UND SYSTEM ZUR BEREITSTELLUNG ÖFFENTLICHER ANSAGEN
PROCÉDÉ ET SYSTÈME POUR FOURNIR DES ANNONCES PUBLIQUES

(30) Priority: 11.06.2021 IN 202141026125; 27.07.2021 GB 202110782
(43) Date of publication of application: 17.04.2024
(73) Proprietor: ALSTOM Holdings, 93400 Saint-Ouen-sur-Seine (FR)
(72) Inventor: SALI, Hemant, Maharashtra Pune 411021 (IN); DOYLE, Roger, Cannock Staffordshire WS11 9RN (GB)
(74) Representative: Zimmermann & Partner Patentanwälte mbB
(86) International application number: PCT/EP2022/062778
(87) International publication number: WO 2022/258288

(56) References cited:
- WO-A1-2021/116173
- KR-B1- 101 534 761
- US-A1- 2018 124 154
- NN: "Overview of Cisco VoIP Infrastructure Solution for SIP", 29 May 2004 (2004-05-29), XP002509790, Retrieved from the Internet <URL:http://www.electronics.dit.ie/staff/srooney/Output/Overview%20of%20Cisco%20VoIP%20Infrastructure%20Solution%20for%20SIP.pdf>
- ROSENBERG J ET AL: "SIP: Session Initiation Protocol", 20020601; 20020600, 1 June 2002 (2002-06-01), pages 1 - 269, XP015009039

## Description

### Technical field

The present invention relates to methods and systems for providing public announcements in a vehicle for public passenger transport, in particular a respective railway vehicle.

### Background

Many vehicles for public passenger transport are equipped with an announcement system for providing live messages such as such as safety announcements, status announcements, and connecting travel announcements to the passengers by a driver or another crew member such as a steward or a conductor. For example, analog lines may be used for making public announcements by a crew member from fixed locations in the vehicle.

Further, document US 10 171 556 B2 describes systems and methods for transferring a public announcement message to an onboard public announcement system (OPAS) installed on a vehicle using a personal electronic device. The personal electronic device establishes a wireless network connection to the OPAS to transmit a public announcement message stored on a personal electronic device. The personal electronic device transmits the public announcement message to the OPAS via the wireless network connection. The personal electronic device may download messages from a remote public announcement server for transfer to the OPAS. The personal electronic device may also record messages and control the playback of messages on the OPAS.

Document KR101534761B1 discloses an integrated railway radio system that provides an Internet protocol (IP)-based push-to-talk (PTT) service between radios.

Furthermore, document EP 2 874 860 B1 describes an operating system for operating functional units in a rail vehicle. At least one base station is provided in each car of the rail vehicle. Each base station communicates, via a wireless interface, with a mobile terminal of an authenticated user, in particular an authenticated train conductor, who operates functional units of the rail vehicle via a graphical user interface of the mobile terminal. The train conductor has the option of making announcements. Audible announcements may be stored in advance and be activated by the train conductor by operating an appropriate sensitive area of the graphical interface.

The existing solutions for public announcements may be not user-friendly enough, have a comparatively large overhead for recording, storing, transferring, and/or playing the announcements, and/or can only be made from specific static locations in the vehicle.

### Problem to be solved

It is an object of the invention to provide methods, systems and devices allowing for high performance at low overhead and/or improved efficiency of public announcement systems, in particular with respect to providing pre-recorded messages with at most short delay (live messages), in terms of time and/or usability. Thus, the user satisfaction and/or the user operability may be enhanced.

Said task is solved by the subject matter of the independent claims. The invention is defined by the subject-matter of the claims.

According to an embodiment of a method for providing public announcements in a vehicle for public passenger transport, in particular a respective railway vehicle, the method includes establishing a data connection between a mobile device, which stores a voice message, and an audio system of the vehicle using a signaling protocol configured for initiating, maintaining, and terminating real-time sessions for voice applications, transferring the voice message as Voice over IP (VoIP) message from the connected mobile device to the audio system using the signaling protocol, and converting the VolP message into the public announcement using the audio system.

The spoken message is typically not pre-recorded (prior to connecting the mobile device to the VoIP server), i.e. a live message.

Further, at least the performance of public announcements in public transport vehicle may be improved due to using VoIP technology.

The mobile device may be a smart phone or a tablet computer.

Further, the mobile device may be a personal electronic device of a person, in particular an employee such as the conductor or another crew member. This typically means that the person has to log in to the mobile device prior to providing the public announcements. As such the personal electronic device may also be provided by the employer, e.g. a railway company.

This facilitate making pre-recorded announcements in different vehicles. For example, a conductor may use the same mobile device in different trains for making (pre-recorded) announcements, such as emergency announcements but also typical normal (frequently recurring) announcements.

In particular, the mobile device may be a personal smart phone or a tablet computer.

Typically, the mobile device allows for recording and storing respective voice messages that may later be transferred as VolP message to the audio system.

In other words, prior to establishing the data connection between the mobile device and the audio system, the voice message may be recorded using the mobile device and/or stored on the mobile device. For example, the data connection may be established after recording the voice message. Alternatively, the data connection may be established after downloading the voice message from another device.

Further, the mobile device typically includes a storage storing a web application or a mobile application which may be used for one or more of the following functions: establishing a data connecting to a VolP server, connecting to the VolP server, recording a spoken message, storing the recorded message, converting the stored message into a VolP message, transferring the converted VolP message to the VolP server, and optionally converting the spoken message on the fly into the VoIP message and/or transferring the converted message VolP message on the fly to the VolP server.

The term "app" as used herein shall embrace the terms "web application" and "mobile application".

The term "server" as used herein shall refer both to a computer program (software) and a device providing functionality for other programs or devices, typically called "clients", in particular to a respective device including the software for providing server functionality (for clients) in a network, in particular a network using the internet protocol suite, Transmission Control Protocol / Internet Protocol (TCP/IP) and/or User Datagram Protocol / Internet Protocol (UDP/IP). In the following a device providing server functionality in a network is also referred to as "host".

The signaling protocol typically includes the session initiation protocol (SIP) for initiating, maintaining, and terminating real-time sessions, and the real-time transport protocol (RTP), in particular the secure real-time transport protocol (SRTP) for transferring the VolP message as respective data stream. Further, signaling protocol typically includes the session description protocol (SDP) for describing session parameters and/or metadata referring to the VoIP message. Accordingly, transferring of the VolP message from the mobile device to the audio system can be achieved with very low overhead and at most short time delay.

Alternatively, the signaling protocol may be based on or include other protocols such as RFC 4566, a H.323. However, these protocols typically require a larger overhead.

The data connection between the mobile device and the audio system is typically established via a VoIP server of the vehicle using the signaling protocol.

In particular, establishing the data connection between the mobile device and the audio system may include establishing a first data connection between the mobile device and the VolP server using the signaling protocol, and establishing a second data connection between the VoIP server and the audio system. Typically, the VoIP server initiates establishing the second data connection with the audio system using the signaling protocol (after the first data connection is established).

The VoIP server may e.g. be provided by a Crew Communication Gateway (CCG) which acts as a SPOC (Single point of contact) for mobile devices to connect to the train and get the desired functionalities such as Public Address, play pre-recorded messages, internal communication, and/or passenger communication.

In these embodiments, the CCG may host the VoIP server to carry out the VolP functionality and may employ SIP over RTP/SRTP.

Note that the VoIP server may also be implemented as a logical device, for example as part of a controller of the audio system.

The mobile device may by wirelessly connected to a wireless interface of the vehicle which is connected to the VoIP server, a wireless router of the vehicle which connected to the VoIP server, or any other device of the vehicle connected to the VolP server and providing a wireless interface for communication with the mobile device. In other words, the mobile device may be (wirelessly) connected to a Wi-Fi network of the vehicle (which is different from the local area network of the vehicle).

Accordingly, connecting the mobile device to the server typically includes connecting the mobile device to and/or via the wireless interface or the wireless router of the vehicle, and/or the other device providing the wireless interface.

Further, connecting the mobile device to the server may include logging in on the server, e.g. using a username and a password that may be provided by or via the app.

Accordingly, it may not be required to registered the mobile device on a terminal within the vehicle. However, the mobile device is typically pre-registered as crew-member device.

The wireless interface may include a (wireless) router and one or more wireless access points.

The server, the audio system, and the wireless interface (in particular the wireless access point(s) and/or the wireless router) are typically connected with each other via a local area network of the vehicle, in particular a local area network that is a wired data network and/or uses the Internet Protocol and/or Ethernet technology.

For example, the local area network may use coaxial cable, twisted pair links and/or fiber optic links in conjunction with switches as a shared medium for information transfer.

Accordingly, communication and/or transferring the VoIP message to the server may be facilitated.

The VoIP server and the app may support different languages, and are typically configured for a specific language in these embodiments, for example a preselected language such as English. This facilitate communication.

Typically, the mobile device communicates with the VolP server using SIP (in particular RFC 3261), and wherein the VoIP server communicates with the audio system using SIP (in particular RFC 3261).

The VoIP message is typically transmitted from the mobile device to the server using a real time transmission protocol (RTP), in particular a secure real time transmission protocol (SRTP) for safety reasons.

Further, the VoIP message is typically transmitted from the server to the audio system using RTP, in particular SRTP.

In other words, the respect VoIP-functionality is typically implemented via SIP and RTP, in particular using SIP and SRTP, and supplemented by the session description protocol SDP.

Accordingly, the VolP server typically provides SIP-server functionality and VoIP-server functionality.

Likewise, the mobile device (the app) and the audio system typically provide a SIP-agent functionality, and SIP-user agent functionality, respectively.

Further, the mobile device (the app) and the audio system may provide a VoIP-agent functionality.

Typically, establishing the first and second data connections includes sending a connection request "SIP INVITE" and receiving a response message "SIP 200 OK".

More particular, the mobile device may initiate establishing the data connection with the audio system using the signaling protocol (SIP and SDP if desired) via the VolP server by sending a connection request "SIP INVITE" to the VoIP server. Upon successfully receiving the connection request from the mobile device, the VoIP server may send a connection request "SIP INVITE" to the audio system using the signaling protocol (SIP and SDP if desired). Upon successfully receiving the connection request from the VolP server, the audio system may send a response message "SIP 200 OK" to the VolP server using the signaling protocol (SIP). Upon successfully receiving the response message "SIP 200 OK" from the audio system, the VoIP server may send a response message "SIP 200 OK" to the mobile device using the signaling protocol (SIP). This may be auto attended.

Upon successfully establishing the data connection between the mobile device and the audio system, and the first and second data connection, respectively (upon successfully receiving the response message "SIP 200 OK" from the VolP server), the mobile device may start transferring the voice message as VoIP message to the audio system via the VolP server, typically using RTP.

If all data of the VoIP message are sent by the mobile device, transferring may be ended using the signaling protocol (SIP).

In particular, the connected mobile device may send an end message "SIP BYE" to the audio system via the VoIP server.

More particular, the connected mobile device may send an end message "SIP BYE" to the VoIP server. Upon successfully receiving the end message "SIP BYE" from the mobile device, the VolP server may send an end message "SIP BYE" to the audio system. Upon successfully receiving the end message "SIP BYE" from the VolP server, the audio system may send a (further) response message "SIP 200 OK" to the VolP server using the signaling protocol (SIP). Upon successfully receiving the response message "SIP 200 OK" from the audio system, the VoIP server may send a (further) response message "SIP 200 OK" to the mobile device using the signaling protocol (SIP).

Alternatively, the VolP server does not wait for the response message "SIP 200 OK" from the audio system, but sends the (further) response message "SIP 200 OK" to the mobile device immediately and thereafter (on completion of sending the VoIP message to the audio system and making the announcement, respectively) send an end message "SIP BYE" to the audio system.

In this way, a particularly fast and/or efficient transferring the voice message as VolP message with very low overhead only can be provided.

Note that transmitting the VoIP message from the VolP server to the audio system may be started (initiated) prior to completely receiving the VolP message from the mobile device at the VoIP server.

Converting the VoIP message into a corresponding public announcement may include converting the VolP message into an analog audio signal.

The analog audio signal may be broadcast in the vehicle, typically using loudspeakers of the audio system.

Further, converting the VolP message and/or broadcasting the analog audio signal may be initialized even prior to finishing transferring (completely transferring) the VolP message to the audio system.

A delay between establishing the data connection and starting converting the VoIP message and/or broadcasting the analog audio signal may be equal to less than a predefined and/or configurable value.

In particular, the delay be smaller than or equal to about 2 s, more typically 1 s or even 0.75 s (predefined second value) to avoid unwanted long delay times in emergencies. However, this may depend on the network bandwidth.

The VoIP message may be converted into the analog audio signal by a controller of the audio system, an audio converter of the audio system, in particular a train amplifier of the audio system, or at least one loudspeaker of the audio system.

In the latter embodiment, the loudspeaker(s) may also provide SIP- and VoIP-functionality. In other words, the VoIP message may also be transferred from a controller of the audio system to a loudspeaker or loudspeakers of the audio system, wherein the loudspeaker(s) is(are) configured to convert the VoIP message (VM) into a respective analog audio signal, these loudspeakers support VoIP and host a respective SIP agent.

Typically, the mobile device, the VoIP server and the controller or the audio converter of the audio system provides SIP-functionality and VoIP-functionality, and the controller or the audio converter of the audio system is connected to simple analog loudspeaker(s).

According to an embodiment of a system for providing public announcements in a vehicle for public passenger transport, in particular a respective railway vehicle, the system includes a wireless interface provided by a vehicle for public passenger transport, and connected to a local area network of the vehicle, a mobile device storing a voice message and connectable to the local area network via the wireless interface, and an audio system provided by the vehicle. The audio system is connectable with the local area network, configured to receive, in a connected state, the voice message as VolP message from the mobile device, when connected to the local area network, using a signaling protocol configured for initiating, maintaining, and terminating real-time sessions for voice applications. Further, the audio system is configured to at least contribute in converting the VoIP message into the public announcement.

The local area network is typically a wired data network and/or uses the Internet Protocol and/or Ethernet technology.

Typically, the system includes a VolP server provided by the vehicle and connectable to the local area network.

The mobile device may communicate with the audio system via the VolP server using the signaling protocol.

Further, the VoIP server may communicate with the audio system using the signaling protocol.

The VolP server may in particular be configured to communicate with one, typically both of the audio system and the mobile device using a protocol providing at least one of, typically all of encryption, message authentication, integrity, and optionally replay attack protection. The real time transmission protocol is typically implemented as a secure real time transmission protocol (SRTP).

The VolP server may be provided by one or more computer devices of a passenger comfort system of the vehicle, the computer(s) hosting the VolP server and typically bridging the Wi-Fi network of the vehicle and the local area network of the vehicle.

In case the existing computing devices of the comfort system does not allow for hosting the VoIP server due to technical reasons, a new computing device may be added to the comfort system to host the VoIP server.

As already explained above, the mobile device may be a smartphone, a tablet computer or the like.

The mobile device may include (store) an app which is, when running on the mobile device, configured to initialize establishing a first data connection with the VolP server, and initialize transferring the voice message as VolP message to the audio system and the VoIP server, respectively.

Likewise, the VoIP server is typically configured to establish a second data connection with the audio system, typically after the first data connection between the mobile device and the VoIP server has been established.

The audio system may include an audio converter configured to convert the VolP message into an analog audio signal, in particular a train amplifier.

Alternatively, the loudspeaker(s) of the audio system may be configured to convert the VolP message into the analog audio signal.

Further, at least one of the VoIP server, the audio converter and the controller (5) of the audio system are implemented as a respective logical device.

Typically, the system is configured to perform the methods as explained herein.

According to an embodiment of a vehicle for public passenger transport, in particular a respective railway vehicle, the vehicle includes a local area network, a device connected to the local area network and providing a wireless interface for a mobile device storing a voice message, such as a wireless router optionally connected with wireless access point, an VoIP server connected to the local area network as explained herein, and an audio system connected with the VoIP server via the local area network, and configured to receive a VoIP message from the server and to convert the VolP message into an analog audio signal, in particular an audio system as explained herein.

A mobile device, in particular a mobile device as explained herein may be connectable to the VolP server via the wireless interface provided by the vehicle and connected with the local area network.

Typically, the desired functionality is provided by an app when running on the mobile device.

The (running) app may provide or facilitate one or more or even all of the following features/functionalities:
Public Address: Manual Public Announcement;
Play pre-recorded emergency/normal message;
Internal Communication: Full duplex VoIP communication, typically between a conductor using the mobile device and fixed driver's handset in the train cabs or between two mobile devices using full duplex communication using VoIP;
Passenger Communication: VoIP communication between conductor using a mobile device and passenger who operated Call For Aid (CFA) at a CFA device; and
View/Display existing alarms such as CFA, PEA (Passenger Emergency Alarm), EEH (Emergency Egress Handle).

Other embodiments include on one or more computer-readable storage media, and one or more computer programs recorded on the one or more computer-readable storage media or computer storage devices, and configured to perform the processes of the methods described herein.

In particular, a computer program and/or a computer-readable storage medium may include instructions which, when executed by a one or more computing units (processors) of a system, in particular a public announcement system disposed in a public transport vehicle, cause the system to carry out the processes of the methods explained herein.

The above-described embodiments can be combined with each other in any way if not specified otherwise. Those skilled in the art will recognize additional features and advantages upon reading the following detailed description, and upon viewing the accompanying drawings.

### Brief description of the figures

The attached drawings illustrate embodiments and together with the description serve to explain the principles of the invention. The elements of the drawings are shown relative to each other and are not necessarily to scale.

The same reference numbers denote similar or even equal components.
FIG. 1A is a block diagram schematically illustrating a system providing public announcements according to embodiments.
FIG. 1B is a block diagram schematically illustrating a system providing public announcements according to embodiments.
FIG. 2A is a block diagram schematically illustrating a system providing public announcements according to embodiments.
FIG. 2B illustrates a flow chart of a method for providing public announcements according to embodiments.
FIG. 2C illustrates a flow chart of a method for providing public announcements according to embodiments.

### Detailed description

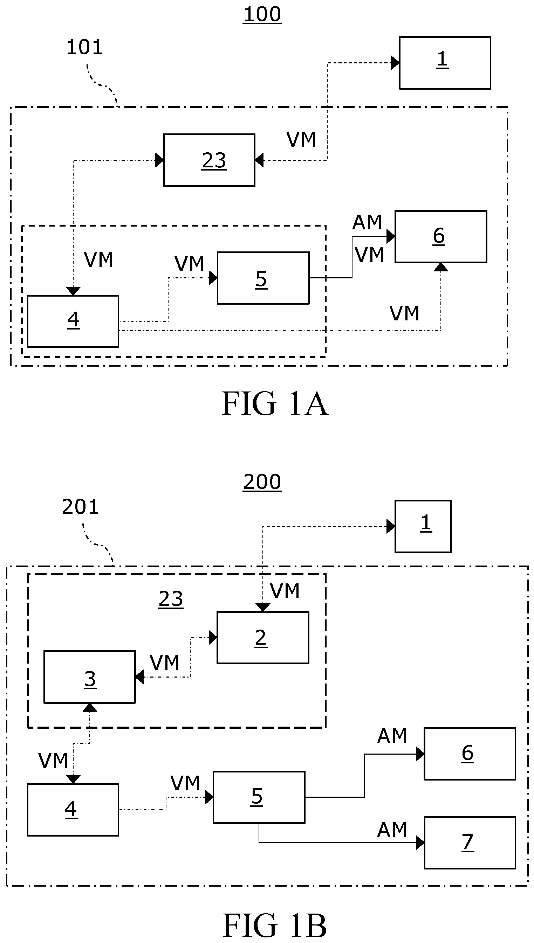

FIG. 1A is a block diagram schematically illustrating a system 100 for providing public announcements.

In the exemplary embodiment, system 100 includes a wireless interface 23, a VoIP server 4 and an audio system 5 arranged in a passenger train 101. As indicated by the dashed-dotted arrows in Fig. 1A, wireless interface 2 for providing a Wi-Fi network of train 101, VoIP server 4 and the audio system 5 are connected with each other via a local area network of the train.

A mobile device 1 storing a voice message, in particular a mobile device of a conductor or another crew member of train 101 is connectable to the local area network via the wireless interface 23, and, when connected to the Wi-Fi network, to initiate establishing, via server 4, a data connection with audio system 5, 6.

For example, the (pre-registered) mobile device 1 of the conductor may wirelessly connect with the trains network which is provided by mobile accessible router (MAR) and access points such as WLAN-access points of train 100.

The voice message(s) may be stored on mobile device 1 in any suitable format, for example as a respective wav-file or more typically in a compressed format such as ogg, mp3 or m4a.

After establishing, the data connection with audio system 5, 6, i.e. a data connection having a first data connection between mobile device 1 and server 4 (through wireless interface 32) and a second data connection between server 4 and audio system 5, 6, mobile device 1 may send the stored voice message as VolP message VM via server 4 to audio system 5, 6.

In the exemplary embodiment, audio system 5, 6 includes a controller 5 or a converter 5 and a loudspeaker 6 connected with the controller or converter 5, typically a plurality of loudspeakers 6.

The controller or converter 5, which is in the following also referred to as audio control device, may be configured to receive via the local area network the VoIP message VM from server 4.

Typically, controller or converter 5 hosts a SIP agent for this purpose (public announcements).

Likewise, mobile device 1 typically also hosts a respective SIP agent, for example as a part of an app, in particular a mobile app running on mobile device 1.

In one embodiment, controller or converter 5 is configured to convert the received VoIP message VM into an analog audio signal AM and to broadcast the analogue audio message AM via loudspeaker(s) 6.

Alternatively, or in addition, controller or converter 5 may be used for forwarding the VoIP message VM to one or more loudspeaker(s) 6 host a SIP agent and configured to convert the VoIP message VM into an analogue audio signal and broadcast the analogue audio signal.

In other words, the public address SIP agent(s) on the audio system 5, 6 may, typically as per an audio system configuration, convert the VoIP message into an analog audio signal using the SIP agent of the controller or converter 5 and the announcement may be made by (analog) loud speaker(s) 6 of the audio system 5, 6 connected to the controller or converter 5, and/or the VoIP message may be forwarded to or even directly be send (as indicated by the arrow between VoIP server 4 and loud speaker 6 in Fig. 1A) from the VoIP server 4 to loud speaker(s) 6 hosting a respective (separate) sip agent for converting the VolP message in the analogue audio signal prior to and/or during making the announcement by the loud speaker(s) 6 of the audio system 5, 6. When the SIP agent of the controller or converter 5 is used, the VolP message may only be converted once into the analog audio signal. A mixed configuration having both simple analog loudspeakers and loudspeakers with sip agents is also possible.

As indicated by the dashed rectangle in Fig. 1A, server 4 and controller/converter 5 may be provided by one physical device and are implemented as respective logical devices, respectively.

Note that the SIP agents on audio system 5, 6 typically auto attend to incoming calls for public address (public announcements).

Thereafter server 4 may transfer the recorded VoIP message to the public address SIP agent of audio system 5 using an RTP protocol, in particular an SRTP protocol.

In other embodiments, the audio system includes or consists of at least one loudspeaker 6 hosting a sip agent, and the VolP server 4 may directly transmit the VolP message to the at least one loudspeaker 6.

FIG. 1B is a block diagram schematically illustrating a system 200 for providing public announcements. The system 200 is similar to the system 100 explained above with regard to figure 1A. However, audio control device 5 of system 200 is connected with two exemplary loudspeakers 6, 7, for example a cab loudspeaker 6 and a saloon loudspeaker 7.

Typically, audio control device 5 is connected with plurality of loudspeakers 6, 7.

Further, it is illustrated in figure 1B that the wireless interface 23 of train 201 typically consists of a router 3 and at least one wireless access point 2.

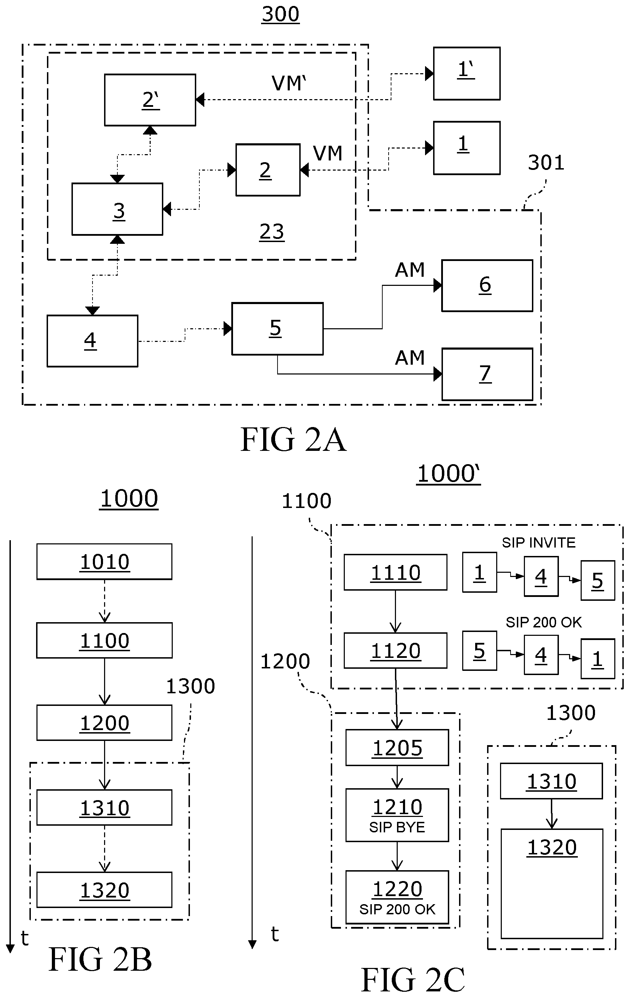

As further illustrated in figure 2A illustrating a system 300 for providing public announcements, two, more typically a plurality of wireless access points 2, 2' may be distributed within the train 301.

Accordingly, the mobile device 1 of a conductor may have access to the local area network of train 301 from at least almost any point within the train 301.

Further, another crew member, e.g. a further conductor may use a further mobile device 1' to make public announcements via server 4 as indicated by the VoIP message VM' in figure 2A.

FIG. 2B illustrates a flow chart of a method 1000 for providing public announcements in a vehicle, in particular a train.

In a block 1100, a mobile device storing a voice message initiates, typically via VoIP server of the vehicle, a data connection with an audio system of the vehicle using a signaling protocol configured for initiating, maintaining, and terminating real-time sessions for voice applications.

The mobile device is typically a mobile device of a crew member and/or pre-registered at the VoIP server.

In a subsequent block 1200, the voice message as VolP message is transferred from the mobile device to the audio system using the signaling protocol, typically via the VoIP server.

In a block 1300 that may be subsequent to block 1200 as indicated by the time arrow t, the VolP message is converted into the public announcement by the audio system.

As indicated by the dashed-dotted rectangle 1300, converting the VoIP message may include a block 1310 of converting the VoIP message into an analog audio signal, and a subsequent block 1320 of broadcasting the analog audio signal in the vehicle, typically using loudspeakers of the audio system.

It is however also possible that broadcasting 1320 the public announcement already starts prior to finishing converting in block 1310 or even prior to finishing transferring in block 1200.

As indicated by block 1010, the voice message may be recorded and stored on the mobile device prior to establishing the data connection in block 1100.

FIG. 2C shows a flow chart of a method 1000' for providing a public announcement in a vehicle for public passenger transport that is similar to method 1000 explained above with regard to Fig. 2B. Method 1000' also includes corresponding blocks 1100, 1200 and 1300 for establishing 1100 the data connection, transferring 1200 the voice message as VolP message and converting 1300 the VolP message into the public announcement.

However, method 1000' is more specific with respect to using the SIP and VolP signaling protocol(s).

In the exemplary embodiment, the mobile device 1 initiates establishing 1100 the data connection with the audio system 5 using SIP by sending a connection request "SIP INVITE" to the audio system 5 in a block 1110, typically via the VolP server 4 sending a "SIP INVITE" to the audio system 5 upon receiving the connection request from the mobile device 1.

In response, the audio system 5 may send a response message "SIP 200 OK" to the mobile device 1 using SIP in a block 1120, typically via the VolP server 4 sending a "SIP 200 OK" to the mobile device 1 upon receiving the response message from the audio system.

Thereafter, mobile device 1 may start playing and transferring the recorded voice message as VolP message to the audio system 5 using RTP, in particular SRTP, typically via the VoIP server 4 in a block 1205.

When the VoIP message is completely transmitted from mobile device 1, mobile device may, in a block 1210, stop playing and send an end message SIP BYE to the audio system 5 using SIP, typically via the VolP server, and the audio system 5 may, upon receiving the end message SIP BYE, send a response message SIP 200 OK back to the mobile device 1 in a block 1220, typically via the VolP server 4.

Note that blocks 1120 and 1220 are typically similar. This typically also applies to blocks 1110 and 1210 except for the different send codes "SIP INVITE" and "SIP BYE", respectively.

As further illustrated in Fig. 2C, converting 1310 the VoIP message into an analog audio signal and/or broadcasting 1320 may start prior to block 1210 or even prior to block 1220.

Although specific embodiments have been illustrated and described herein, it will be appreciated by those of ordinary skill in the art that a variety of alternate and/or equivalent implementations may be substituted for the specific embodiments shown and described without departing from the scope of the present invention. This application is intended to cover any adaptations or variations of the specific embodiments discussed herein. Therefore, it is intended that this invention be limited only by the subject-matter of the claims.

### List of reference numbers

- 1, 1': mobile device
- 2, 2': wireless access point
- 3: (wireless) router
- 23: wireless interface
- 4: host / server
- 5: audio system
- 6, 7: loudspeaker
- 100, 200, 300: system
- 101, 201, 301: vehicle, train
- 1000-1320: method steps

- AM: analog audio signal
- VM, VM': Voice over IP message / VoIP message

## Claims

1. A method (1000, 1000') for providing a public announcement in a vehicle for public passenger transport, in particular in a respective railway vehicle (101, 201, 301), the method comprising:
- establishing (1100) a data connection between a mobile device (1, 1'), which stores a voice message, and an audio system (5-7) of the vehicle (101, 201, 301) using a signaling protocol for initiating, maintaining, and terminating real-time sessions for voice applications, wherein the data connection between the mobile device (1, 1') and the audio system (5-7) is established via a VoIP server (4) of the vehicle (101, 201, 301) using the signaling protocol, and wherein the signaling protocol comprises the session initiation protocol, SIP, for initiating, maintaining, and terminating real-time sessions, and the real-time transport protocol, RTP;
- transferring (1200) the voice message as VoIP message (VM) from the connected mobile device (1, 1') to the audio system (5-7) as VoIP data stream using the signaling protocol; and
- converting (1300) the VoIP message (VM) into the public announcement using the audio system (5-7).

2. The method of claim 1, wherein the signaling protocol comprises the secure real-time transport protocol, SRTP, for transferring the VolP message (VM) as respective data stream, and/or the session description protocol, SDP, for describing session parameters and/or metadata referring to the VolP message (VM).

3. The method of any preceding claim, wherein establishing (1100) the data connection between the mobile device (1, 1') and the audio system (5-7) comprises establishing a first data connection between the mobile device (1, 1') and the VolP server (4) using SIP, and establishing a second data connection between the VoIP server (4) and the audio system (5-7), wherein the voice message is transferred as VoIP message (VM) from the connected mobile device (1, 1') to the audio system (5) via the VoIP server (4), and/or wherein the VolP server (4) establishes a data connection with the audio system (5) using SIP.

4. The method of any preceding claim, wherein establishing (1100) the data connection the mobile device (1, 1') to the VoIP server (4) comprises wirelessly connecting the mobile device to a wireless access point (2) of the vehicle (101, 201, 301) and/or a wireless router (23) of the vehicle (101, 201, 301), the wireless access point (2) and/or the wireless router (23) being connectable with the audio system (5) via the VolP server (4), and/or via a local area network of the vehicle (101, 201, 301), in particular a local area network which is implemented as a wired data network and/or uses the Internet Protocol and/or Ethernet technology.

5. The method of claim 3 or 4, wherein the mobile device (1, 1') communicates with the VoIP server (4) using SIP, and wherein the VoIP server (4) communicates with the audio system (5) using SIP, and/or wherein the transferring (1200) of the voice message as VoIP message (VM) from the mobile device (1, 1') via the VoIP server (4) to the audio system (5) uses RTP, and is initiated after successfully connecting the VoIP server (4) to the audio system (5).

6. The method of any preceding claim, wherein the mobile device (1, 1') initiates establishing (1100) the data connection with the audio system (5, 6, 7) using the signaling protocol, in particular SIP, via the VolP server (4), by sending (1110) a connection request (SIP INVITE) to the audio system (5, 6, 7), via the VoIP server (4), and wherein the audio system (5, 6, 7) sends (1120), on or after successfully receiving the connection request (SIP INVITE), a response message (SIP 200 OK) to the mobile device (1, 1') using SIP, via the VoIP server (4).

7. The method of any preceding claim, wherein the connected mobile device (1, 1'), upon receiving the response message (SIP 200 OK) from the audio system (5), via the VolP server (4), starts (1205) transferring the voice message as VolP message (VM) from the connected mobile device (1, 1') to the audio system (5) using the signaling protocol, in particular RTP, via the VoIP server (4), wherein the connected mobile device (1, 1') sends (1210) an end message (SIP BYE) to the audio system (5, 6, 7) using SIP, via the VoIP server (4), when the VoIP message (VM) is completely transmitted from the mobile device (1, 1'), and wherein the audio system (5, 6, 7), upon receiving the end message (SIP BYE), sends (1220) a response message (SIP 200 OK) to the mobile device (1, 1') using SIP, via the VoIP server (4).

8. The method of any preceding claim, wherein converting (1300) the VolP message (VM) comprises converting (1310) the VoIP message (VM) into an analog audio signal (AM), and/or broadcasting (1320) the analog audio signal in the vehicle, typically using loudspeakers (6, 7) of the audio system (5-7).

9. The method of any preceding claim, wherein transferring (00) the voice message is initialized prior to completely receiving the VoIP message (VM) from the mobile device (1, 1'), and/or wherein converting (1300) the VoIP message (VM) and/or broadcasting (1400) the analog audio signal is initialized prior to finishing transferring the VoIP message (VM) to the audio system (5).

10. The method of any preceding claim, prior to establishing (1100) the data connection between the mobile device (1, 1') and the audio system (5, 6, 7), comprising (1010) recording the voice message with the mobile device (1, 1') and/or storing the voice message on the mobile device (1, 1').

11. The method of any preceding claim, after successfully converting the VolP message (VM) into the analog audio signal (AM), further comprising transferring an end message to the audio system (5) from the connected mobile device (1, 1') using the signaling protocol, via the VolP server (4).

12. The method of any preceding claim, wherein the VoIP message (VM) is converted into the analog audio signal (AM) by a controller (5) of the audio system (5,6,7), an audio converter of the audio system (5,6,7), in particular a train amplifier of the audio system (5,6,7), or at least one loudspeaker (6, 7) of the audio system (5, 6, 7).

13. The method of any preceding claim, wherein at least one of the mobile device (1, 1'), the audio system (5,6,7) and the VoIP server (4) provides SIP-functionality and VoIP-functionality.

14. A system (100, 200, 300) for providing a public announcement in a vehicle for public passenger transport, the system comprising:
- a wireless interface (2, 23) provided by the vehicle (101, 201, 301), and connected to a local area network of the vehicle (101, 201, 301);
- a VolP server (4) provided by the vehicle (101, 201, 301) and connectable to the local area network;
- a mobile device (1, 1') storing a voice message and connectable to the local area network via the wireless interface (2, 23); and
- an audio system (5) provided by the vehicle (101, 201, 301), connectable with the local area network, configured to receive, in a connected state, the voice message as VolP message (VM) from the mobile device (1, 1') via the VoIP server (4) as VoIP data stream, when connected to the local area network, using a signaling protocol for initiating, maintaining, and terminating real-time sessions for voice applications, and configured to convert the VolP message (VM) into the public announcement, wherein the signaling protocol comprises the session initiation protocol, SIP, for initiating, maintaining, and terminating real-time sessions, and the real-time transport protocol, RTP.

15. The system of claim 14, wherein the VolP server (4) is configured to initialize transmitting the VolP message (VM) to the audio system (5) prior to completely receiving the VolP message (VM) from the mobile device (1, 1'), wherein the VoIP server (4) is configured to establish a second data connection with the audio system (5-7), typically after a first data connection between the mobile device (1, 1') and the VolP server (4) has been established, and/or wherein the mobile device (1, 1') is a smartphone or a tablet computer, and/or wherein the vehicle (101, 201, 301) is a railway vehicle, and/or wherein the system is configured to perform the method of any of the claims 1 to 13.

## Patentansprüche

1. Verfahren (1000, 1000') zum Bereitstellen einer Durchsage in einem Fahrzeug für den öffentlichen Personenverkehr, insbesondere in einem entsprechenden Schienenfahrzeug (101, 201, 301), wobei das Verfahren aufweist:
- Herstellen (1100) einer Datenverbindung zwischen einer mobilen Vorrichtung (1, 1'), die eine Sprachmitteilung speichert, und einem Audiosystem (5-7) des Fahrzeugs (101, 201, 301) unter Verwendung eines Signalisierungsprotokolls zum Einleiten, Aufrechterhalten und Beenden von Echtzeit-Sitzungen für Sprachanwendungen, wobei die Datenverbindung zwischen der mobilen Vorrichtung (1, 1') und dem Audiosystem (5-7) über einen VolP-Server (4) des Fahrzeugs (101, 201, 301) unter Verwendung des Signalisierungsprotokolls hergestellt wird, und wobei das Signalisierungsprotokoll das Session Initiation Protocol, SIP, zum Einleiten, Aufrechterhalten und Beenden von Echtzeit-Sitzungen sowie das Real-Time Transport Protocol, RTP, aufweist;
- Übertragen (1200) der Sprachnachricht als VolP-Nachricht (VM) von der verbundenen Vorrichtung (1, 1') an das Audiosystem (5-7) als VolP-Datenstrom unter Verwendung des Signalisierungsprotokolls; und
- Umwandeln (1300) der VolP-Nachricht (VM) in die öffentliche Durchsage unter Verwendung des Audiosystems (5-7).

2. Verfahren nach Anspruch 1, wobei das Signalisierungsprotokoll das Secure Real-Time Transport Protocol, SRTP, zum Übertragen der VolP-Nachricht (VM) als entsprechenden Datenstrom und/oder das Session Description Protocol, SDP, zum Beschreiben von Parametern der Sitzung und/oder Metadaten, die sich auf die VoIP-Nachricht (VM) beziehen, aufweist.

3. Verfahren nach einem der vorstehenden Ansprüche, wobei das Herstellen (1100) der Datenverbindung zwischen der mobilen Vorrichtung (1, 1') und dem Audiosystem (5-7) das Herstellen einer ersten Datenverbindung zwischen der mobilen Vorrichtung (1, 1') und dem VolP-Server (4) unter Verwendung von SIP sowie das Herstellen einer zweiten Datenverbindung zwischen dem VolP-Server (4) und dem Audiosystem (5-7) umfasst, wobei die Sprachnachricht als VolP-Nachricht (VM) vom verbundenen Mobilgerät (1, 1') über den VolP-Server (4) an das Audiosystem (5) übertragen wird, und/oder wobei der VolP-Server (4) unter Verwendung von SIP eine Datenverbindung mit dem Audiosystem (5) herstellt.

4. Verfahren nach einem der vorstehenden Ansprüche, wobei das Herstellen (1100) der Datenverbindung zwischen der mobilen Vorrichtung (1, 1') und dem VolP-Server (4) ein drahtloses Verbinden der mobilen Vorrichtung mit einem drahtlosen Zugangspunkt (2) des Fahrzeugs (101, 201, 301) und/oder einem drahtlosen Router (23) des Fahrzeugs (101, 201, 301) umfasst, wobei der drahtlose Zugangspunkt (2) und/oder der drahtlose Router (23) über den VolP-Server (4) und/oder über ein lokales Netzwerk des Fahrzeugs (101, 201, 301) mit dem Audiosystem (5) verbunden werden können, insbesondere über ein lokales Netzwerk, das als kabelgebundenes Datennetzwerk implementiert ist und/oder das Internetprotokoll und/oder Ethernet-Technologie nutzt.

5. Verfahren nach Anspruch 3 oder 4, wobei die mobile Vorrichtung (1, 1') unter Verwendung von SIP mit dem VolP-Server (4) kommuniziert und wobei der VoIP-Server (4) unter Verwendung von SIP mit dem Audiosystem (5) kommuniziert und/oder wobei das Übertragen (1200) der Sprachnachricht als VolP-Nachricht (VM) von der mobilen Vorrichtung (1, 1') über den VolP-Server (4) an das Audiosystem (5) unter Verwendung von RTP erfolgt und nach dem erfolgreichen Verbindungsaufbau zwischen dem VolP-Server (4) und dem Audiosystem (5) initiiert wird.

6. Verfahren nach einem der vorstehenden Ansprüche, wobei die mobile Vorrichtung (1, 1') das Herstellen (1100) der Datenverbindung mit dem Audiosystem (5, 6, 7) unter Verwendung des Signalisierungsprotokolls, insbesondere SIP, über den VolP-Server (4) einleitet, indem es (1110) eine Verbindungsanfrage (SIP INVITE) über den VolP-Server (4) an das Audiosystem (5, 6, 7) sendet, und wobei das Audiosystem (5, 6, 7) bei oder nach dem erfolgreichen Empfang der Verbindungsanfrage (SIP INVITE) eine Antwortnachricht (SIP 200 OK) unter Verwendung von SIP über den VolP-Server (4) an die mobile Vorrichtung (1, 1') sendet (1120).

7. Verfahren nach einem der vorstehenden Ansprüche, wobei die verbundene mobile Vorrichtung (1, 1') nach Empfang der Antwortnachricht (SIP 200 OK) vom Audiosystem (5) über den VoIP-Server (4) mit dem Übertragen (1205) der Sprachnachricht als VolP-Nachricht (VM) von der verbundenen mobilen Vorrichtung (1, 1') an das Audiosystem (5) unter Verwendung des Signalisierungsprotokolls, insbesondere RTP, über den VolP-Server (4) beginnt, wobei die verbundene mobile Vorrichtung (1, 1') eine Beendigungsnachricht (SIP BYE) an das Audiosystem (5, 6, 7) unter Verwendung von SIP über den VolP-Server (4) sendet (1210), wenn die VoIP-Nachricht (VM) vollständig von der Vorrichtung (1, 1') übertragen wurde, und wobei das Audiosystem (5, 6, 7) nach Empfang der Beendigungsnachricht (SIP BYE) eine Antwortnachricht (SIP 200 OK) unter Verwendung von SIP über den VolP-Server (4) an die mobile Vorrichtung (1, 1') sendet (1220).

8. Verfahren nach einem der vorstehenden Ansprüche, wobei das Umwandeln (1300) der VoIP-Nachricht (VM) ein Umwandeln (1310) der VolP-Nachricht (VM) in ein analoges Audiosignal (AM) und/oder das Ausgeben (1320) des analogen Audiosignals im Fahrzeug, typischerweise durch Verwenden von Lautsprechern (6, 7) des Audiosystems (5-7), aufweist.

9. Verfahren nach einem der vorstehenden Ansprüche, wobei das Übertragen (1200) der Sprachnachricht vor dem vollständigen Empfang der VoIP-Nachricht (VM) von der mobilen Vorrichtung (1, 1') initiiert wird, und/oder wobei das Umwandeln (1300) der VolP-Nachricht (VM) und/oder eine Wiedergabe (1400) des analogen Audiosignals vor dem Abschluss des Übertragens der VolP-Nachricht (VM) an das Audiosystem (5) eingeleitet wird.

10. Verfahren nach einem der vorstehenden Ansprüche, wobei vor dem Herstellen (1100) der Datenverbindung zwischen der mobilen Vorrichtung (1, 1') und dem Audiosystem (5, 6, 7) die Sprachnachricht mit der mobilen Vorrichtung (1, 1') aufgezeichnet (1010) und/oder auf der mobilen Vorrichtung (1, 1') gespeichert wird.

11. Verfahren nach einem der vorstehenden Ansprüche, wobei nach dem erfolgreichen Umwandeln der VolP-Nachricht (VM) in das analoge Audiosignal (AM) ferner eine Beendigungsnachricht von der verbundenen mobilen Vorrichtung (1, 1') unter Verwendung des Signalisierungsprotokolls über den VolP-Server (4) an das Audiosystem (5) übertragen wird.

12. Verfahren nach einem der vorstehenden Ansprüche, wobei die VolP-Nachricht (VM) durch eine Steuerung (5) des Audiosystems (5, 6, 7), einen Audio-Wandler des Audiosystems (5, 6, 7), insbesondere einen Endverstärker des Audiosystems (5, 6, 7), oder mindestens einen Lautsprecher (6, 7) des Audiosystems (5, 6, 7) in das analoge Audiosignal (AM) umgewandelt wird.

13. Verfahren nach einem der vorstehenden Ansprüche, wobei die mobile Vorrichtung (1, 1'), das Audiosystem (5, 6, 7) und/oder der VoIP-Server (4) SIP-Funktionalität und VoIP-Funktionalität bereitstellen.

14. System (100, 200, 300) zum Bereitstellen einer Durchsage in einem Fahrzeug für den öffentlichen Personennahverkehr, wobei das System aufweist:
- eine vom Fahrzeug (101, 201, 301) bereitgestellte und mit einem lokalen Netzwerk des Fahrzeugs (101, 201, 301) verbundene drahtlose Schnittstelle (2, 23);
- einen vom Fahrzeug (101, 201, 301) bereitgestellten VolP-Server (4), der mit dem lokalen Netzwerk verbindbar ist;
- eine mobile Vorrichtung (1, 1'), die eine Sprachnachricht speichert und über die drahtlose Schnittstelle (2, 23) mit dem lokalen Netzwerk verbunden werden kann; und
- ein vom Fahrzeug (101, 201, 301) bereitgestelltes Audiosystem (5), das mit dem lokalen Netzwerk verbindbar ist und so konfiguriert ist, dass es in einem verbundenen Zustand die Sprachnachricht als VolP-Nachricht (VM) vom mobilen Gerät (1, 1') über den VolP-Server (4) als VolP-Datenstrom empfangen kann, wenn es mit dem lokalen Netzwerk verbunden ist, ein Signalisierungsprotokoll zum Einleiten, Aufrechterhalten und Beenden von Echtzeit-Sitzungen für Sprachanwendungen zu verwenden, und das so konfiguriert ist, dass es die VolP-Nachricht (VM) in die Durchsage umwandeln kann, wobei das Signalisierungsprotokoll das Session Initiation Protocol, SIP, zum Einleiten, Aufrechterhalten und Beenden von Echtzeit-Sitzungen sowie das Real-Time Transport Protocol, RTP, aufweist.

15. System nach Anspruch 14, wobei der VoIP-Server (4) so konfiguriert ist, dass er das Übertragen der VolP-Nachricht (VM) an das Audiosystem (5) initialisiert, bevor die VolP-Nachricht (VM) vollständig von der mobilen Vorrichtung (1, 1') empfangen wurde, wobei der VolP-Server (4) so konfiguriert ist, dass er eine zweite Datenverbindung mit dem Audiosystem (5-7) herstellen kann, typischerweise nachdem eine erste Datenverbindung zwischen der mobilen Vorrichtung (1, 1') und dem VolP-Server (4) hergestellt wurde, und/oder wobei die mobile Vorrichtung (1, 1') ein Smartphone oder ein Tablet-Computer ist, und/oder wobei das Fahrzeug (101, 201, 301) ein Schienenfahrzeug ist, und/oder wobei das System so konfiguriert ist, dass es das Verfahren gemäß einem der Ansprüche 1 bis 13 ausführen kann.

## Revendications

1. Procédé (1000, 1000') de fourniture d'une annonce publique dans un véhicule de transport public de passagers, en particulier dans un véhicule ferroviaire respectif (101, 201, 301), le procédé comprenant :
• l'établissement d'une connexion par données (1100) entre un dispositif mobile (1, 1'), qui stocke un message vocal, et un système audio (5-7) du véhicule (101, 201, 301) en utilisant un protocole de signalisation pour initier, maintenir et terminer des sessions en temps réel pour des applications vocales, dans lequel la connexion par données entre le dispositif mobile (1, 1') et le système audio (5-7) est établie via un serveur VoIP (4) du véhicule (101, 201, 301) en utilisant le protocole de signalisation, et dans lequel le protocole de signalisation comprend le protocole d'initiation de session, SIP, pour initier, maintenir et terminer des sessions en temps réel, et le protocole de transport en temps réel, RTP ;
• le transfert (1200) du message vocal sous forme de message VoIP (VM) depuis le dispositif mobile connecté (1, 1') vers le système audio (5-7) sous forme de flux de données VoIP en utilisant le protocole de signalisation ; et
• la conversion (1300) du message VoIP (VM) en l'annonce publique en utilisant le système audio (5-7).

2. Procédé selon la revendication 1, dans lequel le protocole de signalisation comprend le protocole de transport sécurisé en temps réel, SRTP, pour transférer le message VoIP (VM) sous forme de flux de données respectif, et/ou le protocole de description de session, SDP, pour décrire des paramètres de session et/ou des métadonnées relatives au message VoIP (VM).

3. Procédé selon l'une quelconque des revendications précédentes, dans lequel l'établissement d'une connexion par données (1100) entre le dispositif mobile (1, 1') et le système audio (5-7) comprend l'établissement d'une première connexion par données entre le dispositif mobile (1, 1') et le serveur VoIP (4) en utilisant SIP, et l'établissement d'une seconde connexion par données entre le serveur VoIP (4) et le système audio (5-7), dans lequel le message vocal est transféré sous forme de message VoIP (VM) depuis le dispositif mobile connecté (1, 1') vers le système audio (5) via le serveur VoIP (4), et/ou dans lequel le serveur VoIP (4) établit une connexion par données avec le système audio (5) en utilisant SIP.

4. Procédé selon l'une quelconque des revendications précédentes, dans lequel l'établissement d'une connexion par données (1100) du dispositif mobile (1, 1') vers le serveur VoIP (4) comprend la connexion sans fil du dispositif mobile à un point d'accès sans fil (2) du véhicule (101, 201, 301) et/ou à un routeur sans fil (23) du véhicule (101, 201, 301), le point d'accès sans fil (2) et/ou le routeur sans fil (23) pouvant être connecté(s) au système audio (5) via le serveur VoIP (4), et/ou via un réseau local du véhicule (101, 201, 301), en particulier un réseau local qui est mis en œuvre sous forme de réseau de données filaire et/ou utilise le protocole Internet et/ou la technologie Ethernet.

5. Procédé selon la revendication 3 ou 4, dans lequel le dispositif mobile (1, 1') communique avec le serveur VoIP (4) en utilisant SIP, et dans lequel le serveur VoIP (4) communique avec le système audio (5) en utilisant SIP, et/ou dans lequel le transfert (1200) du message vocal sous forme de message VoIP (VM) depuis le dispositif mobile (1, 1') via le serveur VoIP (4) vers le système audio (5) utilise RTP, et est initié après la connexion réussie du serveur VoIP (4) au système audio (5).

6. Procédé selon l'une quelconque des revendications précédentes, dans lequel le dispositif mobile (1, 1') initie l'établissement d'une connexion par données (1100) avec le système audio (5, 6, 7) en utilisant le protocole de signalisation, en particulier SIP, via le serveur VoIP (4), par l'envoi (1110) d'une demande de connexion (SIP INVITE) au système audio (5, 6, 7), via le serveur VoIP (4), et dans lequel le système audio (5, 6, 7) envoie (1120), lors de ou après la réception réussie de la demande de connexion (SIP INVITE), un message de réponse (SIP 200 OK) au dispositif mobile (1, 1') en utilisant SIP, via le serveur VoIP (4).

7. Procédé selon l'une quelconque des revendications précédentes, dans lequel le dispositif mobile connecté (1, 1'), lors de la réception du message de réponse (SIP 200 OK) provenant du système audio (5), via le serveur VoIP (4), commence (1205) le transfert du message vocal sous forme de message VoIP (VM) depuis le dispositif mobile connecté (1, 1') vers le système audio (5) en utilisant le protocole de signalisation, en particulier RTP, via le serveur VoIP (4), dans lequel le dispositif mobile connecté (1, 1') envoie (1210) un message de fin (SIP BYE) au système audio (5, 6, 7) en utilisant SIP, via le serveur VoIP (4), lorsque le message VoIP (VM) est entièrement transmis depuis le dispositif mobile (1, 1'), et dans lequel le système audio (5, 6, 7), lors de la réception du message de fin (SIP BYE), envoie (1220) un message de réponse (SIP 200 OK) au dispositif mobile (1, 1') en utilisant SIP, via le serveur VoIP (4).

8. Procédé selon l'une quelconque des revendications précédentes, dans lequel la conversion (1300) du message VoIP (VM) comprend la conversion (1310) du message VoIP (VM) en un signal audio analogique (AM), et/ou la diffusion (1320) du signal audio analogique dans le véhicule, typiquement en utilisant des haut-parleurs (6, 7) du système audio (5-7).

9. Procédé selon l'une quelconque des revendications précédentes, dans lequel le transfert (00) du message vocal est initialisé préalablement à la réception complète du message VoIP (VM) provenant du dispositif mobile (1, 1'), et/ou dans lequel la conversion (1300) du message VoIP (VM) et/ou la diffusion (1400) du signal audio analogique est initialisée préalablement à la fin du transfert du message VoIP (VM) vers le système audio (5).

10. Procédé selon l'une quelconque des revendications précédentes, comprenant, préalablement à l'établissement de la connexion par données (1100) entre le dispositif mobile (1, 1') et le système audio (5, 6, 7), l'enregistrement (1010) du message vocal avec le dispositif mobile (1, 1') et/ou le stockage (1010) du message vocal sur le dispositif mobile (1, 1').

11. Procédé selon l'une quelconque des revendications précédentes, comprenant en outre, après la conversion réussie du message VoIP (VM) en un signal audio analogique (AM), le transfert d'un message de fin au système audio (5) depuis le dispositif mobile connecté (1, 1') en utilisant le protocole de signalisation, via le serveur VoIP (4).

12. Procédé selon l'une quelconque des revendications précédentes, dans lequel le message VoIP (VM) est converti en un signal audio analogique (AM) par un contrôleur (5) du système audio (5, 6, 7), un convertisseur audio du système audio (5, 6, 7), en particulier un amplificateur de train du système audio (5, 6, 7), ou au moins un haut-parleur (6, 7) du système audio (5, 6, 7).

13. Procédé selon l'une quelconque des revendications précédentes, dans lequel au moins l'un parmi le dispositif mobile (1, 1'), le système audio (5, 6, 7) et le serveur VoIP (4) fournit une fonctionnalité SIP et une fonctionnalité VoIP.

14. Système (100, 200, 300) de fourniture d'une annonce publique dans un véhicule de transport public de passagers, le système comprenant :
• une interface sans fil (2, 23) fournie par le véhicule (101, 201, 301), et connectée à un réseau local du véhicule (101, 201, 301) ;
• un serveur VoIP (4) fourni par le véhicule (101, 201, 301) et pouvant être connecté au réseau local ;
• un dispositif mobile (1, 1') stockant un message vocal et pouvant être connecté au réseau local via l'interface sans fil (2, 23) ; et
• un système audio (5) fourni par le véhicule (101, 201, 301), pouvant être connecté au réseau local, configuré pour recevoir, dans un état connecté, le message vocal sous forme de message VoIP (VM) depuis le dispositif mobile (1, 1') via le serveur VoIP (4) sous forme de flux de données VoIP, lorsqu'il est connecté au réseau local, en utilisant un protocole de signalisation pour initier, maintenir et terminer des sessions en temps réel pour des applications vocales, et configuré pour convertir le message VoIP (VM) en l'annonce publique, dans lequel le protocole de signalisation comprend le protocole d'initiation de session, SIP, pour initier, maintenir et terminer des sessions en temps réel, et le protocole de transport en temps réel, RTP.

15. Système selon la revendication 14, dans lequel le serveur VoIP (4) est configuré pour initialiser la transmission du message VoIP (VM) au système audio (5) préalablement à la réception complète du message VoIP (VM) provenant du dispositif mobile (1, 1'), dans lequel le serveur VoIP (4) est configuré pour établir une seconde connexion par données avec le système audio (5-7), typiquement après qu'une première connexion par données entre le dispositif mobile (1, 1') et le serveur VoIP (4) a été établie, et/ou dans lequel le dispositif mobile (1, 1') est un smartphone ou un ordinateur-tablette, et/ou dans lequel le véhicule (101, 201, 301) est un véhicule ferroviaire, et/ou dans lequel le système est configuré pour exécuter le procédé selon l'une quelconque des revendications 1 à 13.
